Europäisches Patentamt

European Patent Office

Office européen des brevets

(11) Publication number: **0 537 956 A2**

## EUROPEAN PATENT APPLICATION

(21) Application number: **92309236.5**

(22) Date of filing: **09.10.92**

(51) Int. Cl.5: **G01N 27/30**

(30) Priority: **17.10.91 US 777992**

(43) Date of publication of application:
**21.04.93 Bulletin 93/16**

(84) Designated Contracting States:
**CH FR GB LI**

(71) Applicant: **ORION RESEARCH, INC.**
**Schrafft Center, 529 Main Street**
**Cambridge, Massachusetts 02129(US)**

(72) Inventor: **Frant, Martin**
**131 Westchester Road**
**Newton, Massachusetts 02158(US)**

(74) Representative: **Hackett, Sean James**
**Marks & Clerk 57-60 Lincoln's Inn Fields**
**London WC2A 3LS (GB)**

(54) Reference electrode system for detection of monovalent cations.

(57) A reference electrode for use in conjunction with monovalent-cation sensing systems. The electrode produces minimal interference with measurements of monovalent cation in a sample stream through use of an electrode element sensitive to bromide or iodide, which liberates especially small amounts of free silver ion into the sample stream, and use of a cesium-based reference solution.

FIG. 1

EP 0 537 956 A2

## BACKGROUND OF THE INVENTION

### A. Field of the Invention

The present invention relates generally to ion measurement, and more particularly to measurement of low levels of monovalent cations in aqueous solution.

### B. Description of the Related Art

In many hydroelectric and other industrial environments where large volumes of water continuously make contact with metal surfaces, electrolytic purity of the water can prove very important. For example, in most power plants, steam is used to drive the massive turbines that generate electrical energy. Salts present in the makeup water can be retained, in trace amounts, within the steam droplets. Because of the considerable amount of steam involved and the continuous nature of the process, even trace amounts of salt can result in buildup of deposits on the carefully balanced turbine blades, degrading operational efficiency and causing stress on the drive components. In addition, many researchers now believe that sodium ions can be involved in some types of stress-corrosion attacks on turbine blades.

For these reasons, users of vulnerable equipment employ a variety of electrolytic techniques to detect and purify the water used in conjunction with such equipment. Equipment manufacturers, noting the improvement in water-purification technology that has taken place in recent years, have modified their specifications to reduce the tolerable levels of aqueous cation. At present, it is desirable to be able to detect less than one part-per-billion (hereinafter "ppb") of monovalent cation in water.

Typical cation-detection systems employ a sensing electrode, which responds electrolytically to the species of interest, and a separate reference electrode that establishes a measurement baseline. The two electrodes are introduced into a sample stream, and the outputs are combined to produce a single reading indicative of the cation concentration. This reading represents the raw output of the sensing electrode with respect to that of the reference electrode.

In general, the limit of detection is determined by the existence and levels of "interferents", which mimic the species of interest for purpose of detection. In the case of monovalent-cation detection systems, the most common interferent is hydrogen ion. However, the concentration of this interferent is straightforwardly reduced below the detection threshold by introduction into the sample stream of an alkaline substance that raises the pH. Other monovalent-cation interferents are less easily neutralized or sequestered; these include lithium, potassium and silver ions.

The source of these troublesome interferents is often found to be the reference electrode, which contains electrolytic solutions and ionic material in crystalline form. The reference electrode must, in order to perform its function, be electrically coupled to the sample stream; this requires some degree of fluid communication and, consequently, diffusion into the sample stream of the concentrated ionic compounds contained within the reference electrode.

A common reference electrode includes an ionic reference solution and, immersed therein, a silver wire coated with a layer of silver chloride (AgCl); these elements are sealed within a barrel having a liquid junction at one end, and render the electrode sensitive to the activity of chloride ion in the reference solution. Since the silver chloride is only moderately soluble, an equilibrium concentration of $Ag^+$ and $Cl^-$ ions is quickly established in the reference solution, and this concentration fixes the potential of the electrode. This potential is established with respect to the sample stream by electrical communication therewith via the liquid junction (which may be, for example, a porous frit).

Because the equivalent ionic conductivities of aqueous silver ion and aqueous chloride ion are dissimilar, a reference solution consisting solely of these species will exhibit a large junction potential due to the different diffusion rates of these ions across the liquid junction. This is undesirable, because the junction potential can vary with temperature and with the mechanical integrity of the liquid junction; these largely idiosyncratic factors are unrelated to the ion concentrations under study and, consequently, junction potentials that are normally large relative to the voltage levels being measured can distort those measurements considerably.

To maintain smaller junction potentials, the reference solution typically includes relatively large quantites of the dissolved chloride salt of a different secondary cation, such as potassium. The equivalent ionic conductivities of potassium ion and chloride ion are very similar (that is, they approach "equitransference"), and therefore themselves produce a small junction potential. In order to prevent stripping of the coating from the silver wire, the potassium chloride solution is saturated with respect to silver. However, because silver chloride is only moderately soluble and the overall junction potential reflects the relative concentrations of all ionic species, use of a concentrated solution of potassium chloride effectively suppresses the contribution of dissolved silver chloride and produces a small net junction potential.

Unfortunately, many sensing electrodes, particularly those designed to detect sodium ion, exhibit extreme sensitivity to silver ion; in other words, silver ion is a particularly potent interferent for such electrodes. The slow leakage of reference solution into the sample stream can result in introduction of substantial amounts of silver ion, particularly where the reference solution contains the elevated silver-ion concentrations associated with KCl/AgCl systems.

One way of decreasing the amount of silver ion that can escape from the electrode barrel is to utilize a so-called "double-junction" design. In this type of electrode, a first glass barrel having a liquid junction is encapsulated within a second glass barrel, also having a liquid junction; only this second junction makes contact with the sample solution.

The inner barrel contains the coated wire and a reference solution saturated with silver chloride. The outer barrel contains, in addition to the inner barrel, a concentrated solution of potassium chloride with no silver ion. The second liquid junction allows formation of an electrolytic circuit when the electrode is immersed in a sample solution. Because the ion concentration of the sample solution is usually relatively small, the exit rate of ions from the outer barrel is generally designed to be much larger than that from the inner barrel. The effect is to dilute the amount of silver ion entering the sample stream while limiting the overall junction potential of the electrode.

Although such designs have improved performance considerably, they do not eliminate the problem. Practical considerations place limitations on the relative sizes of the inner and outer electrodes and, therefore, the degree to which it is possible to control migration of silver ion into the outer barrel and thereafter into the sample solution. Furthermore, although potassium ion is less of an interferent than silver, leakage of potassium also distorts measurements of monovalent-cation concentration.

DESCRIPTION OF THE INVENTION

A. Objects of the Invention

It is, therefore, an object of the present invention to reduce the contamination of a sample stream by interferents originating with a reference electrode.

It is another object of the invention to provide a reference electrode with acceptable junction potentials, and which interferes minimally with measurements of monovalent cations (particularly sodium ions).

It is yet another object of the invention to provide an apparatus for measuring monovalent-cation concentrations with enhanced sensitivity.

Other objects will, in part, be obvious and will, in part, appear hereinafter. The invention accordingly comprises an article of manufacture possessing the features and properties exemplified in the constructions described herein and the several steps and the relation of one or more of such steps with respect to the others and the apparatus embodying the features of construction, combination of elements and the arrangement of parts which are adapted to effect such steps, all as exemplified in the following summary and detailed description, and the scope of the invention will be indicated in the claims.

B. Brief Description of the Drawings

The foregoing discussion will be understood more readily from the following detailed description of the invention, when taken in conjunction with the accompanying drawings, in which:

FIG. 1 schematically depicts a single-junction electrode constructed in accordance with the present invention; and

FIG. 2 schematically depicts a double-junction electrode constructed in accordance with the present invention.

C. Description of the Preferred Embodiments

As described above, silver ion tends to be the most problematic interferent emitted by reference electrodes; however, secondary cations such as potassium can also distort concentration measurements. The reference electrode of the present invention employs two features to enhance accuracy. The first feature is directed to minimization of silver-ion outflow, and the second to reduction of measurement distortion caused by the secondary cation.

The use of a potassium chloride reference solution tends to increase the solubility of silver chloride, requiring greater amounts of silver chloride to achieve saturation (to protect the coated wire) and thereby creating a larger reservoir of silver ion that can migrate out of the electrode. However, the solubility of silver chloride in chloride solutions is lower than that of other silver halides in solutions of the halide. Accordingly, silver chloride appears comparatively advantageous relative to the other halides, and practitioners ordinarily use chloride systems in environments where silver-ion concentrations must be minimized.

I have found this accepted reasoning to be flawed. Although, for example, solid silver bromide is more soluble in a bromide solution than solid silver chloride is in a chloride solution, the concentration of free silver ion is actually much lower in bromide and iodide solutions than in chloride solutions. This is due to increased amounts of soluble silver complexes, as shown in the following table:

### TABLE 1
#### Calculated Solubility (mol/l) of Silver in Solutions

Initial Solution: 1M CsX, saturated with AgX

| Species | X = Cl | X = Br | X = I |
|---|---|---|---|
| $Ag^+$ | $1.8 \times 10^{-10}$ | $9.8 \times 10^{-13}$ | $9.6 \times 10^{-17}$ |
| $AgX$ | $4.2 \times 10^{-7}$ | $1.6 \times 10^{-8}$ | $3.1 \times 10^{-10}$ |
| $AgX_2^-$ | $2.9 \times 10^{-5}$ | $3.5 \times 10^{-6}$ | $3.9 \times 10^{-3}$ |
| $AgX_3^{-2}$ | $1.8 \times 10^{-4}$ | $9.9 \times 10^{-5}$ | $7.2 \times 10^{-6}$ |
| $AgX_4^{-3}$ | $1.8 \times 10^{-4}$ | $6.3 \times 10^{-4}$ | $3.9 \times 10^{-3}$ |
| $Ag_2X_6^{-4}$ | --- | --- | $2.0 \times 10^{-3}$ |
| $Ag_3X_8^{-5}$ | --- | --- | $7.1 \times 10^{-3}$ |
| All dissolved Ag | | $3.9 \times 10^{-4}$ | $7.3 \times 10^{-4}$ 1.7 |
| $\times 10^{-2}$ | | | |

The relative difference in concentrations of free silver ion becomes even more pronounced as one dilutes the aqueous solution; since the sample stream is usually plain water, silver bromide and silver iodide solutions exhibit their greatest advantage over silver chloride solutions in the very environment where free silver ion is least tolerable. This effect is demonstrated in the following table, in which solubility values are shown for the Table 1 solutions diluted 1/1000.

TABLE 2

| Calculated Solubility (mol/l) of Silver in Solutions | | | |
|---|---|---|---|
| Species | X = Cl | X = Br | X = I |
| $Ag^+$ | $1.2 \times 10^{-7}$ | $8.0 \times 10^{-10}$ | $8.5 \times 10^{-14}$ |
| AgX | $2.3 \times 10^{-7}$ | $7.9 \times 10^{-10}$ | $3.1 \times 10^{-10}$ |
| $AgX_2^-$ | $1.9 \times 10^{-11}$ | $3.5 \times 10^{-9}$ | $5.1 \times 10^{-9}$ |
| $AgX_3^{-2}$ | $1.2 \times 10^{-16}$ | $1.0 \times 10^{-10}$ | $8.2 \times 10^{-9}$ |
| $AgX_4^{-3}$ | $1.0 \times 10^{-22}$ | $6.3 \times 10^{-13}$ | $8.3 \times 10^{-11}$ |
| $Ag_2X_6^{-4}$ | --- | --- | $3.2 \times 10^{-15}$ |
| $Ag_3X_6^{-5}$ | --- | --- | $1.3 \times 10^{-17}$ |
| All dissolved Ag | | $3.5 \times 10^{-7}$ | $5.2 \times 10^{-9}$ 1.4 |
| x $10^{-8}$ | | | |
| Solid Phase | --- | $7.2 \times 10^{-7}$ | $1.7 \times 10^{-5}$ |

The second factor favoring bromide and iodide systems, also reflected in the foregoing tables, stems from the greater tendency of such systems toward soluble complex formation. For silver chloride, bromide and iodide solutions, complexes of the form $AgX_2^-$, $AgX_3^{-2}$ and $AgX_4^{-3}$ (where X indicates a halide ion) are found to accumulate. In the case of iodide, the complexes $Ag_2I_6^{-4}$ and $Ag_3I_8^{-5}$ also form. These complexes represent an additional collection vehicle for free silver ion, since the complexes do not interfere with measurement of monovalent cation.

Accordingly, the reduced solubilities of silver bromide and silver iodide as compared with silver chloride in water favors use of bromide or iodide systems notwithstanding higher silver solubilities in bromide or iodide solutions. The amount of free silver ion, already lower for bromide or iodide systems, is further reduced as compared with chloride systems due to the greater tendency toward complex formation of the former systems.

Thus, contrary to accepted practice, I have found that reference electrodes designed to be sensitive to bromide or iodide ion (rather than chloride ion) actually produce less free silver ion despite the greater relative solubility of the silver salt in the halide solution.

The second feature of the present invention relates to choice of the secondary cation. Although potassium is the cation traditionally employed in reference solutions, I have found that cesium ion performs far more effectively in monovalent-cation detection systems. This is due, first, to the fact that cesium ion is a rather poor interferent in systems designed to measure small monovalent cations such as sodium (probably because of the relatively small charge/size ratio of cesium ion). Secondly, cesium halide solutions are nearly equitransferent across liquid junctions.

At present, despite the better theoretical performance of the iodide system, a bromide version is currently preferred because cesium bromide can be obtained commercially with lower levels of sodium impurity than is the case for cesium iodide.

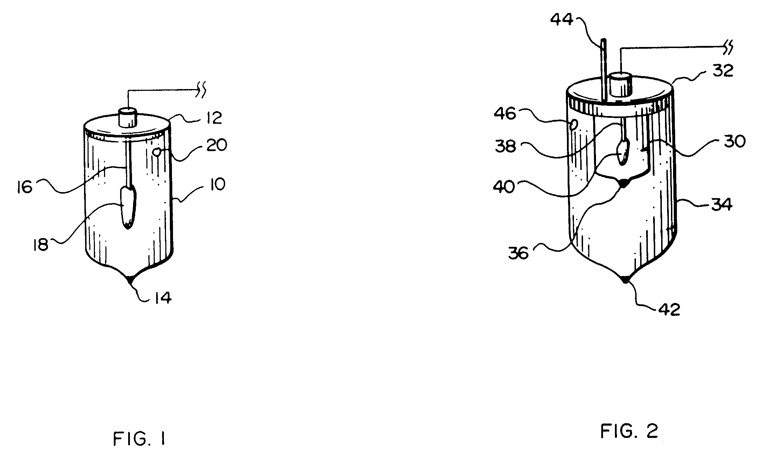

The improvements of the present invention are usefully applied in both single- and double-junction electrode designs. A representative single-junction electrode is shown in FIG. 1. A glass tube or barrel 10 is sealed at one end by a cap 12 (preferably formed of plastic or other suitable material), and terminates in a porous glass frit 14 at the other end. Cap 12 retains, within the volume of barrel 10, a silver wire 16. The lower portion of wire 16 is coated with solid-phase silver bromide (or iodide) 18; the upper portion of wire 16, which extends through cap 12, provides the terminal for the reference electrode. The interior of barrel 10 is filled, via an aperture 20 located toward the top of the barrel, with a 1M cesium bromide (or iodide) solution that is saturated with silver bromide (or iodide). The portion of the reference electrode below aperture 20 is immersed in a sample stream and the terminal connected to a measuring device, which is also connected to a sensing electrode.

The double-junction embodiment of the present invention is depicted in FIG. 2. As shown therein, a first glass barrel 30 is mounted to a cap 32, which is also mounted to a second glass barrel 34 so as to retain barrel 30 within the interior of barrel 34. The top portion of barrel 30 is sealed against cap 32 to limit fluid communication between barrels 30 and 34; the bottom portion of barrel 30 terminates in a porous glass frit 36. Cap 32 also retains, within the volume of barrel 30, a silver wire 38. The lower portion of wire 38 is coated with solid-phase silver bromide (or iodide) 40; the upper portion of wire 38, which extends through cap 32, provides the terminal for the reference electrode. The bottom of barrel 34 also terminates in a porous glass frit 42.

5

Barrel 30 is filled, via a tube 44 extending through cap 32 and into the interior of barrel 30, with with a 1M cesium bromide (or iodide) solution that is saturated with silver bromide (or iodide). Barrel 34 is filled, via an aperture 46 located toward the top of the barrel, with a 1M cesium bromide (or iodide) solution that is free from silver. This electrode may be used in the manner described above in connection with FIG. 1.

In use, the reference electrode of the present invention and a suitable sensing electrode (which is quantitatively sensitive to the concentration of the monovalent cation or cations of interest) are connected to a suitable electronic measurement device. These are immersed in sample solution, and a reading taken from the measuring device. Because the resolution of this system is not impaired by leakage of species likely to distort the output of the sensing electrode, the operating capabilities of this system will substantially exceed those of conventional equipment.

D. Conclusion

It will therefore be seen that I have developed a reference electrode that is uniquely suited to monovalent-cation detection systems. This electrode produces minimal interference with accurate measurements, and therefore allows cation concentrations to be measured with enhanced sensitivity.

The terms and expressions which have been employed are used as terms of description and not of limitation, and there is no intention, in the use of such terms and expressions, of excluding any equivalents of the features shown and described or portions thereof, but it is recognized that various modifications are possible within the scope of the invention claimed.

**Claims**

1. A reference electrode for use in conjunction with a sensing electrode for monovalent cation, the reference electrode comprising:
   a. a non-conducting barrel having means for establishing a liquid junction;
   b. a silver wire disposed within the barrel, and at least partially coated with solid-phase AgI;
   c. a reference solution contained within the barrel and capable of establishing fluid communication with a sample solution via the liquid junction, the reference solution consisting essentially of an aqueous solution saturated with respect to silver ion and also containing the dissolved salt of a monovalent cation and iodide ion; and
   d. a terminal, electrically coupled to the silver wire, on the exterior of the barrel.

2. The electrode of claim 1 wherein the monovalent cation dissolved in the reference solution is cesium ion.

3. A reference electrode for use in conjunction with a sensing electrode for monovalent cation, the reference electrode comprising:
   a. a non-conducting barrel having means for establishing a liquid junction;
   b. a silver wire disposed within the barrel, and at least partially coated with solid-phase silver halide;
   c. a reference solution contained within the barrel and capable of establishing fluid communication with a sample solution via the liquid junction, the reference solution consisting essentially of an aqueous solution saturated with respect to silver ion and also containing the dissolved cesium salt of iodide ion; and
   d. a terminal, electrically coupled to the silver wire, on the exterior of the barrel.

4. A reference electrode for use in conjunction with a sensing electrode for monovalent cation, the reference electrode comprising:
   a. a first non-conducting barrel containing:
      1) means for establishing a first liquid junction;
      2) an aqueous solution capable of establishing fluid communication with a sample solution via the first liquid junction, the aqueous solution containing the dissolved salt of a monovalent cation and iodide ion;
   b. a second non-conducting barrel disposed within the first barrel, the second barrel containing:
      1) means for establishing a second liquid junction;
      2) a silver wire at least partially coated with solid-phase AgI; and
      3) a reference solution in fluid communication with the interior of the first barrel via the second liquid junction, the reference solution consisting essentially of an aqueous solution saturated with respect to silver ion; and

c. a terminal, electrically coupled to the silver wire, on the exterior of the barrel.

5. A reference electrode for use in conjunction with a sensing electrode for monovalent cation, the reference electrode comprising:

a. a non-conducting barrel having means for establishing a liquid junction;

b. a metal wire disposed within the barrel, and at least partially coated with solid-phase MI, wherein M is the ion of a metal whose iodide salt is only moderately soluble in water and I is iodide;

c. a reference solution contained within the barrel and capable of establishing fluid communication with a sample solution via the liquid junction, the reference solution consisting essentially of an aqueous solution saturated with respect to M and also containing the dissolved salt of a monovalent cation and iodide ion; and

d. a terminal, electrically coupled to the metal wire, on the exterior of the barrel.

6. A method of detecting and measuring monovalent cations in a sample solution, the method comprising:

a. immersing a sensing electrode, sensitive to the concentration of monovalent cation and coupled to a measuring device, in the sample solution;

b. immersing a reference electrode, also coupled to the measuring device, in the sample solution, the reference electrode comprising:

1) a non-conducting barrel having means for establishing a liquid junction;

2) a silver wire disposed within the barrel, and at least partially coated with solid-phase AgX, wherein X is selected from the group consisting of bromide and iodide;

3) a reference solution contained within the barrel and capable of establishing fluid communication with the sample solution via the liquid junction, the reference solution consisting essentially of an aqueous solution saturated with respect to silver ion and also containing the dissolved salt of a monovalent cation and X;

4) a terminal, electrically coupled to the silver wire, on the exterior of the barrel; and

c. actuating the measuring device to produce a measurement indicative of the concentration of the monovalent cations in the sample solution.

7. The method of claim 6 wherein the monovalent cation dissolved in the reference solution is cesium ion.

7

FIG. 1

FIG. 2

EP 0 537 956 A2